# EUROPÄISCHE PATENTSCHRIFT

(11) **EP 1 755 925 B1**
(45) Veröffentlichungstag und Bekanntmachung des Hinweises auf die Patenterteilung: **15.07.2009**
(21) Anmeldenummer: 05740165.5
(22) Anmeldetag: 25.04.2005
(51) Int. Cl.: B60R 21/01

(54) **VERFAHREN ZUM BETREIBEN EINES SICHERHEITSSYSTEMS FÜR FAHRZEUGINSASSEN**
METHOD FOR OPERATING A SAFETY SYSTEM FOR VEHICLE PASSENGERS
PROCÉDÉ POUR OPÉRER UN SYSTÈME DE SÉCURITÉ POUR PASSAGERS DE VÉHICULES

(30) Priorität: 03.06.2004 DE 102004027206
(43) Veröffentlichungstag der Anmeldung: 28.02.2007
(73) Patentinhaber: ROBERT BOSCH GMBH, 70442 Stuttgart (DE)
(72) Erfinder: KROENINGER, Mario, 77815 Buehl (DE); THEISEN, Marc, 74354 Besigheim (DE); BUNSE, Michael, 71665 Vaihingen/Enz (DE); MOLDENHAUER, Maike, 71111 Waldenbuch (DE); WELLHOEFER, Matthias, 71701 Schwieberdingen (DE); FRESE, Volker, 71701 Schwieberdingen (DE)
(86) Internationale Anmeldenummer: PCT/EP2005/051843
(87) Internationale Veröffentlichungsnummer: WO 2005/118348

(56) Entgegenhaltungen:
- EP-A- 1 233 390
- DE-A1- 10 049 911
- DE-A1- 10 206 351
- US-A1- 2002 099 485
- US-A1- 2003 071 446
- US-B1- 6 405 132

## Beschreibung

### Stand der Technik

Die Erfindung betrifft ein Verfahren zum Betreiben eines Sicherheitssystems für Fahrzeuginsassen nach dem Oberbegriff des Anspruchs 1. Bei Sicherheitssystemen der genannten Art wird das Auftreten einer Crashsituation mit Sensoren detektiert, die Messgrößen wie beispielsweise Beschleunigung und/oder Druck erfassen. Die Sensoren können zentral in dem Fahrzeug oder auch in dessen Peripherie angeordnet sein. Insbesondere für die Erkennung von Seitencrashs werden bevorzugt ausgelagerte Sensoren eingesetzt, die beispielsweise im Bereich der Fahrzeugtüren angeordnet sind und auf Druckwirkung ansprechen. In immer größerem Umfang werden Fahrzeuge auch mit satellitengestützten Navigationssystemen ausgestattet, die eine Standortbestimmung des Fahrzeugs ermöglichen. Aus DE 102 06 351 A1 ist eine akustische Analyse eines Aufprallobjekts bekannt. Diese Analyse wird mit Positionsdaten eines Navigationsgeräts verknüpft. Aus US 2002/009485 A1 ist es bekannt, ein Fahrzeugsbedingungssignal in Abhängigkeit von einem GPS-Signal zu erzeugen. Aus US 2003/0071446 A1 ist es bekannt, mittels eines Navigationssystems den Ort des Unfalls eines Fahrzeugs zu übertragen. Ein wesentliches Problem bei der Steuerung eines gattungsgemäßen Sicherheitssystems, insbesondere bei einem Winkel- oder Seitenaufprall, liegt in der Anforderung, zu einem sehr frühen Zeitpunkt des Crashvorgangs bereits schon eine Auslöseentscheidung für Rückhaltemittel, wie Airbags, Sicherheitsgurte und dergleichen, treffen zu müssen und dabei dennoch eine hohe Misusefestigkeit zu erreichen. Unter Misusefestigkeit im Sinne der Erfindung versteht man die Fähigkeit eines gattungsgemäßen Sicherheitssystems, eine Auslöseentscheidung für Rückhaltemittel nur dann zu treffen, wenn tatsächlich ein entsprechendes Risiko für die Fahrzeuginsassen besteht. Die Forderung nach einer frühzeitigen Auslöseentscheidung ergibt sich dadurch, dass bei den genannten Crashtypen nur eine vergleichsweise kurze Knautschzone des Fahrzeugs zur Verfügung steht. Eine hohe Misusefestigkeit wird gefordert, um ein unnötiges Auslösen von Rückhaltemitteln zu verhindern, da dies kostenträchtige Reparaturen des Sicherheitssystems zur Folge hat.

### Vorteile der Erfindung

Die Erfindung bietet den Vorteil, dass es gelingt, die genannten gegensätzlichen Forderungen besser als bisher möglich zu erfüllen. Die Erfindung macht sich dabei die Erkenntnis zunutze, dass mithilfe von Daten des Navigationssystems eine Standortbestimmung des Fahrzeugs mit hoher Genauigkeit möglich ist. Diese Daten werden für eine Bewertung der Wahrscheinlichkeit eines Winkel- oder Seitencrashs herangezogen und ermöglichen so eine frühzeitige Plausibilisierung einer Auslöseentscheidung. Befindet sich das Fahrzeug beispielsweise im Bereich einer Kreuzung, wenn die Ausgangssignale von Beschleunigungs- und/oder Drucksensoren auf eine Gefahr hinweisende Werte annehmen, spricht vieles dafür, dass das vorliegende Ereignis ein Seitencrash ist. Die Auslöseentscheidung für die Auslösung geeigneter Rückhaltemittel kann somit frühzeitig plausibilisiert werden. Bei einer größtmöglichen Schutzfunktion für die Fahrzeuginsassen kann andererseits ein unnötiges Auslösen von Rückhaltemitteln weitgehend verhindert werden. Lassen bei einer anderen Situation dagegen die Daten des Navigationssystems jeden Hinweis auf eine Kreuzung oder Straßeneinmündung vermissen und bewegt sich das Fahrzeug ordnungsgemäß auf seiner Fahrspur, dann ist die Wahrscheinlichkeit eines Seitencrashs vergleichsweise gering zu bewerten. Mittels der Erfindung kann die Plausibilisierung einer Auslöseentscheidung differenzierter vorgenommen werden.

Vorteilhafterweise werden weiterhin mit einem jeweiligen Standort verbundene statistische Daten über die Häufigkeit von Unfällen bei der Auslöseentscheidung für Rückhaltemittel berücksichtigt. Dadurch kann im Bereich von Unfallschwerpunkten des Straßennetzes das Sicherheitssystem empfindlicher geschaltet werden.

Besonders vorteilhaft können weiter aktuelle Umweltdaten an dem jeweiligen Standort des Fahrzeugs erfasst und bei der Auslöseentscheidung von Rückhaltemitteln berücksichtigt werden.

### Zeichnung

Ausführungsbeispiele der Erfindung werden nachfolgend unter Bezug auf die Zeichnung näher erläutert. Dabei zeigt
- Figur 1: ein Blockschaltbild eines Sicherheitssystems
- Figur 2: ein weiteres Blockschaltbild eines Sicherheitssystems
- Figur 3: ein weiteres Blockschaltbild eines Sicherheitssystems.

### Beschreibung der Ausführungsbeispiele

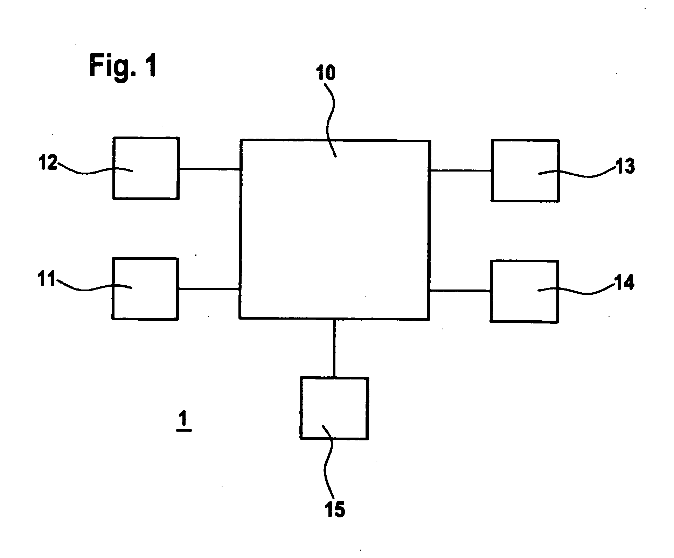

Figur 1 zeigt, beispielhaft, ein Blockschaltbild eines Sicherheitssystems. Das Sicherheitssystem 1 umfasst ein Steuergerät 10. Mit dem Steuergerät 10 sind Sensoren 11, 12 verbunden. Diese Sensoren erfassen Messgrößen, wie beispielsweise Beschleunigung und/oder Druck, die von einem Crashereignis stammen können. Die Sensoren 11, 12 können an einer zentral gelegenen Stelle des Fahrzeugs oder an einer peripheren Stelle angeordnet sein. Vielfach verfügen moderne Fahrzeuge über einen zentral angeordneten Sensor, der Beschleunigungen erfasst, sowie zusätzlich über so genannte ausgelagerte Sensoren an der Peripherie des Fahrzeugs, beispielsweise in den Türbereichen, die Druckwerte erfassen. Mit dem Steuergerät 10 sind weiter Rückhaltemittel 13, 14, wie beispielsweise Airbags und oder Sicherheitsgurte, verbunden. Weiterhin ist das Steuergerät 10 mit einem bordeigenen Navigationssystem 15 verbunden.

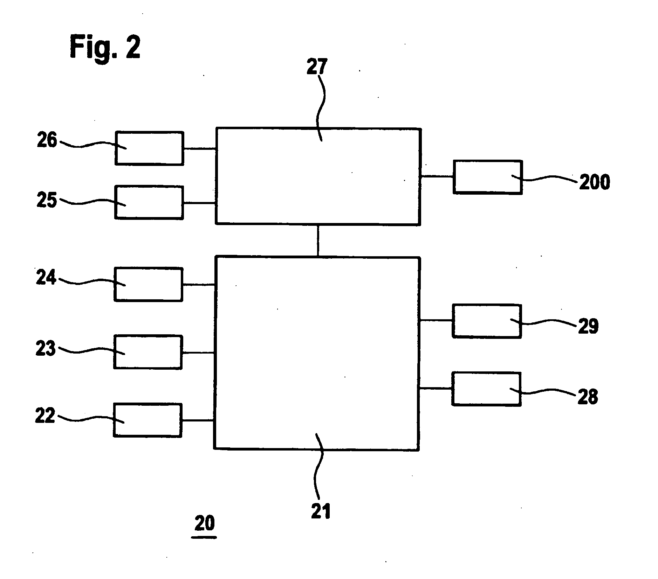

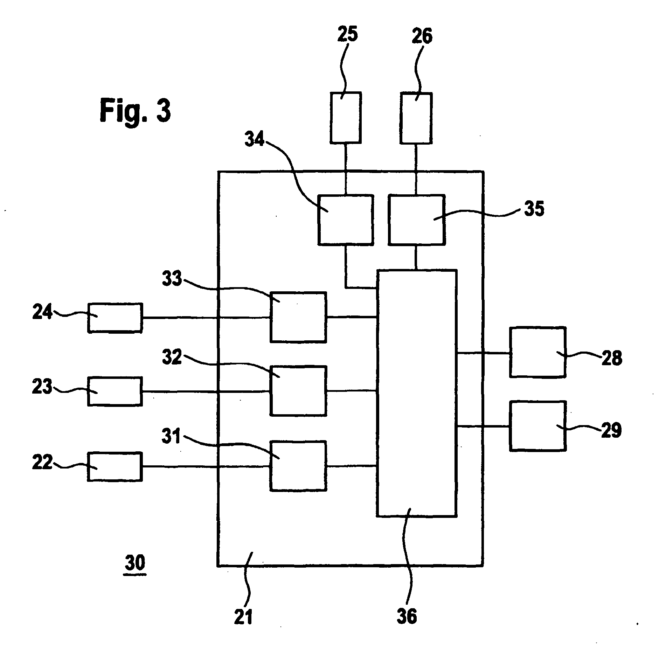

Im Folgenden wird die prinzipielle Funktionsweise des in Figur 1 dargestellten Sicherheitssystems 1 beschrieben. Die Sensoren 11, 12 erfassen Beschleunigungs- und/oder Druckwerte und wandeln diese Messwerte in entsprechende elektrische Ausgangssignale um, die dem Steuergerät 10 zugeführt werden. Das Steuergerät 10 wertet diese Ausgangssignale der Sensoren 11,12 aus und steuert die Rückhaltemittel 13,14 entsprechend. Bei einem Crash werden beispielsweise zum Schutz der Fahrzeuginsassen Sicherheitsgurte gestrafft und Airbags ausgelöst. Erfindungsgemäß werden nun von dem Steuergerät 10 zusätzlich von dem bordeigenen Navigationssystem 15 gelieferte Daten für eine Auslöseentscheidung ausgewertet. Hierbei handelt es sich vorzugsweise um Daten, die den aktuellen Standort des Fahrzeugs betreffen, soweit sie relevant für ein Crashereignis sein können. Dies wird im Folgenden näher anhand von durch Figur 2 und Figur 3 erläuterten Ausführungsbeispielen beschrieben.

Figur 2 zeigt ein Blockschaltbild eines Sicherheitssystems 20, das als zentralen Bestandteil wiederum ein Steuergerät 21 umfasst. Mit dem Steuergerät 21 sind Sensoren 22,23,24 verbunden. Weiterhin sind mit dem Steuergerät 21 Rückhaltemittel 28, 29 verbunden. Weiterhin ist mit dem Steuergerät 21 ein Funktionsmodul 27 verbunden. Schließlich sind mit dem Funktionsmodul 27 noch die Funktionsmodule 25 und 26 verbunden. Im Folgenden wird die Funktionsweise des Sicherheitssystems 20 beschrieben. Von den Sensoren 22,23,24 werden laufend typische Messgrößen erfasst, anhand derer auf eine kritische Unfallsituation geschlossen werden kann. So erfasst der beispielsweise zentral angeordnete Sensor 22 beispielsweise die Beschleunigung des Fahrzeugs in Quer- und Längsrichtung. Ein weiterer Sensor 23 erfasst beispielsweise die Beschleunigung in z-Richtung. Vorzugsweise an die Peripherie des Fahrzeugs ausgelagerte Sensoren 24 erfassen Beschleunigung und/oder Druck in dem Bereich der Außenhaut des Fahrzeugs. Die Ausgangssignale der genannten Sensoren 22,23,24 werden dem Steuergerät 21 zugeführt und von diesem nach vorgebbaren Kriterien verarbeitet, um eine kritische Unfallsituation zu erkennen und im Falle von Gefahr eine möglichst frühe Auslöseentscheidung für die für den Schutz der Fahrzeuginsassen vorgesehenen Rückhaltemittel 28,29 zu treffen. Erfindungsgemäß werden für diese Auslöseentscheidung noch weitere Daten ausgewertet, die in den Funktionsmodulen 25,26,27,200 aufbereitet und dem Steuergerät 21 zugeführt werden. Das Funktionsmodul 25 erfasst beispielsweise Fahrdynamikdaten des Fahrzeugs, wie insbesondere die Geschwindigkeit, und führt diese dem Funktionsmodul 27 zu. Das Funktionsmodul 26 erfasst Daten aus dem Navigationssystem des Fahrzeugs und führt diese dem Funktionsmodul 27 zu. Für die Erfindung von besonderem Interesse sind aktuelle Standortdaten des Fahrzeugs, da mit diesen Daten eine zuverlässigere Auslöseentscheidung für die Rückhaltemittel 28, 29 bei gleichzeitig verbesserter Misusefestigkeit erzielt werden kann. Dies wird nun anhand von zwei beispielhaften Fahrsituationen noch näher erläutert. Wenn beispielsweise die von den Funktionsmodulen 25,26 gelieferten Daten belegen, dass sich das Fahrzeug mit vergleichsweise hoher Geschwindigkeit auf der rechten Spur einer Autobahn fortbewegt, ist die Wahrscheinlichkeit eines Seitencrashs, insbesondere die Wahrscheinlichkeit eines Seitencrashs von rechts, eher als gering einzustufen. Ausgangssignale der Sensoren 24 können daher, situationsangepasst, mit einer geringeren Gewichtung bewertet und ggf. völlig vernachlässigt werden. In der Praxis kann dies zweckmäßig dadurch erreicht werden, dass vorgebbare Schwellwerte für die Ausgangssignale der Sensoren 24 durch das Funktionsmodul angepasst, insbesondere angehoben werden.

Belegen andererseits die von dem Funktionsmodul 25 gelieferten Fahrdynamikdaten und die von dem Funktionsmodul 26 bereit gestellten Standortdaten, dass sich das Fahrzeug mit angepasster Geschwindigkeit auf einem innerörtlichen Straßennetz bewegt und dabei vielleicht gerade eine Kreuzung passiert, besteht ein wesentlich größeres Risiko eines Seitencrashs. Diesem größeren Risiko kann zweckmäßig dadurch Rechnung getragen werden, dass den Ausgangssignalen der peripheren Sensoren 24 eine größere Bedeutung zugemessen wird. In der Praxis kann dies zweckmäßig dadurch erreicht werden, dass durch das Funktionsmodul 27 vorgebbare Schwellwerte für die Ausgangssignale der Sensoren 24 abgesenkt werden, um die Ansprechempfindlichkeit zu erhöhen. Besonders vorteilhaft werden dem Sicherheitssystem 21, verknüpft mit den von dem Funktionsmodul 26 gelieferten Standortdaten, zusätzlich auch noch statistische Daten über die mit einem bestimmten Standort verbundene Unfallhäufigkeit zur Verfügung gestellt. Dadurch kann das Sicherheitssystem beispielsweise bei Annäherung an einen bekannten Unfallschwerpunkt empfindlicher geschaltet werden. In der Praxis kann dies wiederum durch Absenken der Schwellwerte für Ausgangssignale der Sensoren 22,23,24 erfolgen.
In einer vorteilhaften Ausführungsvariante der Erfindung kann in diesem Zusammenhang noch ein zusätzliches Funktionsmodul 200 vorgesehen sein, das Umweltdaten erfasst und bewertet. In Verbindung mit den von dem Funktionsmodul 26 gelieferten Standortdaten kann so ggf. eine noch zuverlässige Risikobewertung erfolgen. Wird beispielsweise eine Strecke befahren, die als kritischer Unfallschwerpunkt mit Aquaplaning bewertet ist, kann anhand der von dem Funktionsmodul 200 gelieferten Umweltdaten verifiziert werden, ob dieses Risiko gegenwärtig tatsächlich besteht oder nicht. Bei auftretendem starkem Regen ist mit diesem Risiko vorsorglich zu rechnen. Bei trockener Fahrbahn kann dagegen von einem geringeren Risiko ausgegangen werden.

Ein weiteres Ausführungsbeispiel der Erfindung wird anhand des in Figur 3 als Blockschaltbild dargestellten Sicherheitssystems 30 erläutert. Hierbei sind mit den Sensoren 22,23,24 beziehungsweise mit den Funktionsmodulen 25,26 verbundene Funktionsmodule 31,32,33,34,35 vorgesehen. Diese Funktionsmodule verarbeiten die von den Sensoren 22,23,24 und den Funktionsmodulen 25,26 gelieferten Ausgangssignale und führen diese einem Funktionsmodul 36 zu. Das Funktionsmodul 36 bewertet alle ihm zugeführten Eingangssignale und leitet aus diesen die Auslöseentscheidung für die Rückhaltemittel 28, 29 ab.

### Bezugszeichenliste

- 1: Sicherheitssystem
- 10: Steuergerät
- 11: Sensor
- 12: Sensor
- 13: Rückhaltemittel
- 14: Rückhaltemittel
- 15: Navigationssystem
- 20: Sicherheitssystem
- 21: Steuergerät
- 22: Sensor
- 23: Sensor
- 24: Sensor
- 25: Funktionsmodul
- 26: Funktionsmodul
- 28: Rückhaltemittel
- 29: Rückhaltemittel
- 30: Sicherheitssystem
- 31: Funktionsmodul
- 32: Funktionsmodul
- 33: Funktionsmodul
- 34: Funktionsmodul
- 35: Funktionsmodul
- 36: Funktionsmodul

## Patentansprüche

1. Verfahren zum Betreiben eines Sicherheitssystems (1, 20,30) für Fahrzeuginsassen mit Sensoren (11,12,22,23,24) für die Erfassung von crashrelevanten Daten, wie Beschleunigungs- und/oder Druckwerten, mit einem Steuergerät (10,21) und mit Rückhaltemitteln (28,29), wie Airbag, Sicherheitsgurt oder dergleichen, wobei das Sicherheitssystem (1,20,30) eine Verbindung zu einem Navigationssystem (15) des Fahrzeugs umfasst, wobei dem Sicherheitssystem (1,20,30) Standortdaten vom Navigationssystem (15) des Fahrzeugs zugeführt werden, **dadurch gekennzeichnet, dass** die Standortdaten für eine Bewertung einer Wahrscheinlichkeit eines Winkel- oder Seitencrashs herangezogen werden und so eine frühzeitige Plausibilisierung einer Auslöseentscheidung ermöglichen und dass mit dem jeweiligen Standort verbundene statistische Daten über eine Häufigkeit von Unfällen bei einer Auslöseentscheidung für die Rückhaltemittel (28, 29) berücksichtigt werden.

2. Verfahren nach Anspruch 1, **dadurch gekennzeichnet, dass** in Abhängigkeit von Standortdaten Auslöseschwellwerte des Sicherheitssystems (1,20,30) verändert werden.

3. Verfahren nach Anspruch 2, **dadurch gekennzeichnet, dass** bei einer standortabhängigen Risikoveränderung die Auslöseschwellwerte verringert oder angehoben werden.

4. Verfahren nach einem der vorhergehenden Ansprüche, **dadurch gekennzeichnet, dass** zusätzlich zu Standortdaten Fahrdynamikdaten des Fahrzeugs erfasst und bei der Auslöseentscheidung berücksichtigt werden.

5. Verfahren nach einem der vorhergehenden Ansprüche, **dadurch gekennzeichnet, dass** zusätzlich zu Standortdaten des Fahrzeugs Umweltdaten (200) an dem Standort des Fahrzeugs erfasst und bei der Auslöseentscheidung der Rückhaltemittel (28,29) berücksichtigt werden.

6. Verfahren nach Anspruch 5, **dadurch gekennzeichnet, dass** die Auslöseschwellwerte in Abhängigkeit von den Umweltdaten veränderbar sind.

## Claims

1. Method for operating a safety system (1, 20, 30) for vehicle occupants having sensors (11, 12, 22, 23, 24) for sensing crash-related data such as acceleration values and/or pressure values, having a control unit (10, 21) and having restraining means (28, 29) such as an airbag, seatbelt or the like, wherein the safety system (1, 20, 30) comprises a connection to a navigation system (15) of the vehicle, wherein location data are fed to the safety system (1, 20, 30) from the navigation system (15) of the vehicle, **characterized in that** the location data are used to evaluate a probability of a crash at an angle or side crash and therefore permit early plausibility-checking of a triggering decision, and **in that** statistical data which are associated with the respective location and relate to a frequency of accidents are taken into account in a triggering decision for the restraining means (28, 29).

2. Method according to Claim 1, **characterized in that** triggering threshold values of the safety system (1, 20, 30) are changed as a function of location data.

3. Method according to Claim 2, **characterized in that** the triggering threshold values are reduced or increased in the event of a location-dependent change in risk.

4. Method according to one of the preceding claims, **characterized in that**, in addition to location data, vehicle movement dynamics data of the vehicle are collected and taken into account in the triggering decision.

5. Method according to one of the preceding claims, **characterized in that**, in addition to location data of the vehicle, environmental data (200) are collected at the location of the vehicle and are taken into account in the triggering decision of the restraining means (28, 29).

6. Method according to Claim 5, **characterized in that** the triggering thresholds can be changed as a function of the environmental data.

## Revendications

1. Procédé d'exploitation d'un système de sécurité (1, 20, 30) pour les occupants d'un véhicule, comprenant des capteurs (11, 12, 22, 23, 24) pour détecter des données en rapport avec une collision telles que des valeurs d'accélération et/ou de pression, comprenant un module de commande (10, 21) et comprenant des moyens de retenue (28, 29) tels qu'un coussin gonflable de sécurité, une ceinture de sécurité ou similaire, le système de sécurité (1, 20, 30) comprenant une liaison avec un système de navigation (15) du véhicule, des données d'emplacement étant acheminées au système de sécurité (1, 20, 30) par le système de navigation (15) du véhicule, **caractérisé en ce que** les données d'emplacement sont utilisées pour une évaluation d'une probabilité de collision angulaire ou latérale et permettent ainsi de rendre plausible avec anticipation une décision de déclenchement et **en ce que** les données statistiques relatives à une fréquence d'accidents liées à l'emplacement correspondant sont prises en compte lors d'une décision de déclenchement des moyens de retenue (28, 29).

2. Procédé selon la revendication 1, **caractérisé en ce que** les valeurs de seuil de déclenchement du système de sécurité (1, 20, 30) sont modifiées en fonction des données d'emplacement.

3. Procédé selon la revendication 2, **caractérisé en ce qu'**en présence d'une modification du risque dépendant de l'emplacement, les valeurs de seuil de déclenchement sont diminuées ou augmentées.

4. Procédé selon l'une des revendications précédentes, **caractérisé en ce que** des données dynamiques de déplacement du véhicule sont acquises en plus des données d'emplacement et prises en compte lors de la décision de déclenchement.

5. Procédé selon l'une des revendications précédentes, **caractérisé en ce que** des données d'environnement (200) à l'emplacement du véhicule sont acquises en plus des données d'emplacement du véhicule et prises en compte lors de la décision de déclenchement des moyens de retenue (28, 29).

6. Procédé selon la revendication 5, **caractérisé en ce que** les valeurs de seuil de déclenchement peuvent être modifiées en fonction des données d'environnement.
